# EUROPÄISCHE PATENTANMELDUNG

(11) **EP 4 173 767 A1**
(43) Veröffentlichungstag der Anmeldung: **03.05.2023**
(21) Anmeldenummer: 21205451.4
(22) Anmeldetag: 29.10.2021
(51) Int. Cl.: B25J 9/16

(54) **VERFAHREN ZUR STEUERUNG EINES BAUROBOTERS SOWIE BAUROBOTER**

(71) Anmelder: Hilti Aktiengesellschaft, 9494 Schaan (LI)
(72) Erfinder: Brugger, Peter, 6800 Feldkirch (AT); Zanona, Julia, 6800 Feldkirch (AT); Normes, Stein, 6856 Sogndal (NO); Strand, Eirik, 6856 Sogndal (NO)
(74) Vertreter: Hilti Aktiengesellschaft Corporate Intellectual Property

(57) **Zusammenfassung**

Die Erfindung betrifft ein Verfahren zur Steuerung eines Bauroboters (10), der einen Manipulator (12) aufweist und wobei der Manipulator (12) einen Endeffektor (14) aufweist. Das Verfahren sieht vor, dass der Endeffektor (14) von einer Anfangsposition (48) zu einer Arbeitsposition (50, 64) bewegt wird, wobei ein Hindernis (52, 72) identifiziert wird, und das identifizierte Hindernis (52, 72) umgangen wird. Weiter betrifft die Erfindung einen Bauroboter (10).

## Beschreibung

Die Erfindung geht aus von einem Verfahren zur Steuerung eines Bauroboters, der einen Manipulator aufweist und wobei der Manipulator einen Endeffektor aufweist, wobei der Endeffektor von einer Anfangsposition zu einer Arbeitsposition bewegt wird.

Um einen möglichst hohen Grad an Autonomie eines Bauroboters zu ermöglichen, ist es wünschenswert, wenn der Bauroboter seinen Endeffektor mit möglichst hoher Sicherheit ausgehend von einer Anfangsposition auf einer Baustelle zu einer Arbeitsposition auf der Baustelle bewegt, sodass mit dem Endeffektor an der Arbeitsposition eine Bauaufgabe verrichtet werden kann.

Aufgabe der vorliegenden Erfindung ist es daher, ein Verfahren zur Steuerung eines Bauroboters sowie einen Bauroboter anzubieten, die es ermöglichen, einen Endeffektor des Bauroboters von einer Anfangsposition zu einer Arbeitsposition sicher zu bewegen.

Gelöst wird die Aufgabe durch ein Verfahren zur Steuerung eines Bauroboters, der einen Manipulator aufweist und wobei der Manipulator einen Endeffektor aufweist, wobei der Endeffektor von einer Anfangsposition zu einer Arbeitsposition bewegt wird. Dabei wird ein Hindernis identifiziert. Das Hindernis kann sich beispielsweise zwischen der Anfangsposition und der Arbeitsposition befinden. Die Arbeitsposition kann von der Anfangsposition aus nicht durch eine geradlinige Translation des Endeffektors erreichbar sein. Beispielsweise kann sich ein Hindernis entlang einer geradlinigen Verbindung zwischen der Arbeitsposition und der Anfangsposition befinden. Das Hindernis kann derart angeordnet und / oder ausgebildet sein, dass es zu einer Kollision des Manipulators und / oder des Endeffektors mit dem Hindernis käme, wenn der Endeffektor geradlinig bewegt würde. Die Kollision kann auch einem Berühren des Hindernisses entsprechen. Auch ist denkbar, dass die Arbeitsposition nur in einer bestimmten Relativstellung des Bauroboters, des Manipulators und / oder des Endeffektors überhaupt erreichbar ist.

Die Arbeitsposition kann sich beispielsweise an einer Decke, an einer Wand und / oder auf einem Boden befinden.

Das Hindernis kann eine Unebenheit in einer Oberfläche sein und / oder umfassen. Das Hindernis kann sich insbesondere in der Nähe der Anfangsposition und / oder der Arbeitsposition befinden. Derartige Unebenheiten ergeben sich beispielsweise bei Wellblech, bei einer eine oder mehrere Stufen aufweisenden Decke und / oder bei einer Decke, einer Wand und / oder einem Boden, von der oder von dem ein Bauelement abragt. Das Bauelement und / oder das Hindernis können beispielsweise eine Leitung, ein Rohr, ein Kabel, ein Trägerelement, ein Installationselement und / oder dergleichen sein.

Der Endeffektor kann wenigstens ein Werkzeug, beispielsweise ein Bohrwerkzeug, ein Schneidwerkzeug, ein Setzwerkzeug, insbesondere zum Setzen eines Ankers, ein Meißelwerkzeug und / oder dergleichen aufweisen. Unter Bewegen des Endeffektors von einer Anfangsposition zu einer Arbeitsposition kann dann verstanden werden, dass das Werkzeug, insbesondere eine Werkzeugspitze des Werkzeugs, von der Anfangsposition zur Endposition bewegt wird.

Das Hindernis kann mittels einer Untersuchung eines Arbeitsbereichs des Bauroboters 10 identifiziert werden.

Alternativ oder ergänzend kann das Hindernis durch Analyse von Planungsdaten, beispielsweise aus einem BIM (Building Information Model)-Daten identifiziert werden.

Das Verfahren sieht weiter vor, dass das identifizierte Hindernis umgangen wird. Somit kann eine Kollision mit dem Hindernis vermieden werden. Unter Umgehen eines Hindernisses kann beispielsweise verstanden werden, dass der Endeffektor von einer Seite des Hindernisses zu einer anderen Seite des Endeffektors kollisionsfrei gelangt. Es kann darunter alternativ oder ergänzend verstanden werden, dass der Endeffektor kollisionsfrei am Hindernis entlang bewegt wird.

Zur Umgehung des Hindernisses kann wenigstens ein Bewegungsschema realisiert werden. Das Bewegungsschema kann vordefiniert und / oder vordefinierbar sein. Es kann wiederholt ausgeführt werden. Das Bewegungsschema kann einen Planungsaufwand zur Planung eines Bewegungspfades zur Umgehung des Hindernisses reduzieren. Somit kann beispielsweise Computerrechenzeit eingespart werden. Die Arbeitsposition kann ausgehend von der Anfangsposition schneller erreicht werden. Das Bewegungsschema kann auf wenigstens einer Besonderheit einer typischen Baustelle beruhen. Das Bewegungsschema kann einen Teil eines gesamten Bewegungsablaufs zur Bewegung des Endeffektors von der Anfangsposition zur Arbeitsposition bilden.

Das Bewegungsschema kann eine Abfolge von Teilbewegungen des Bauroboters, insbesondere seines Manipulators und / oder seines Endeffektors umfassen. Eine Teilbewegung kann wenigstens eine Translation und / oder eine Rotation wenigstens eines Elements des Bauroboters, insbesondere seines Manipulators und / oder seines Endeffektors umfassen. Eine Teilbewegung kann auch hinsichtlich ihres Ausmaßes variabel sein. Beispielsweise kann ein Bewegungsschema auch mehrere Varianten umfassen, bei denen ein oder mehrere Teilbewegungen zwar in der jeweils gleichen Abfolge vorgesehen sind, sich jedoch in ihrem Ausmaß, beispielsweise bei einer Translation der Länge der Translation oder bei einer Rotation dem Drehwinkel, unterscheiden. Das Bewegungsschema kann somit einer Heuristik zur Steuerung der Bewegung des Bauroboters entsprechen.

Das Bewegungsschema kann einer U-förmigen oder im Wesentlichen U-förmigen Bewegung entsprechen.

Beispielsweise kann das Bewegungsschema einem senkrechten oder im Wesentlichen senkrechten Entfernen des Endeffektors von der Anfangsposition, einer hierzu wiederum senkrechten oder im Wesentlichen senkrechten Bewegung des Endeffektors sowie anschließend hierzu senkrechten oder zumindest im Wesentlichen senkrechten Annähern des Endeffektors an die Arbeitsposition umfassen.

Die Länge des Entfernens und / oder des Annäherns kann wenigstens 0,3 m, 0,8 m oder 1 m betragen.

Es kann vorgesehen sein, die notwendige Länge des Entfernens und / oder des Annäherns anhand von BIM-Daten zu bestimmen. Beispielsweise kann in Bezug auf von einer Decke abgehängten Installationselementen die maximale Höhe bestimmt werden, unterhalb der sich keines der Installationselemente mehr befindet.

Dabei kann "im Wesentlichen" eine Abweichung von beispielsweise +/-10° entsprechen. Insbesondere kann es einer Abweichung bis zu +/- 5° entsprechen. "Im Wesentlichen senkrecht" kann somit beispielsweise einem Winkel zwischen 80 und 100°, insbesondere zwischen 85° und 95°, entsprechen. Winkelangaben wie beispielsweise "senkrecht" können sich jeweils auf Winkel gemessen zu einer Tangentialebene durch den jeweiligen Bezugspunkt, insbesondere die Anfangsposition beziehungsweise die Arbeitsposition, beziehen.

Befinden sich beispielsweise die Anfangsposition und die Arbeitsposition an einer Decke, so kann das Bewegungsschema zunächst eine vertikale oder zumindest im Wesentlichen vertikale Bewegung des Endeffektors nach unten, eine anschließende horizontale oder zumindest im Wesentlichen horizontale Verlagerung des Endeffektors sowie anschließend eine vertikale oder zumindest im Wesentlichen vertikale Bewegung des Endeffektors nach oben umfassen.

Ein solches U-förmiges oder im Wesentlichen U-förmiges Bewegungsschema kann auf Baustellen häufig erfolgreich verwendet werden. Denn oftmals ist eine geradlinige Annäherung an eine Arbeitsposition in senkrechter oder zumindest im Wesentlichen senkrechter Richtung hindernisfrei möglich.

Befindet sich beispielsweise der Endeffektor an einer Anfangsposition an einer Decke und soll er sich zu einer Arbeitsposition an derselben Decke bewegen, so sind häufig zwischen der Anfangsposition und der Arbeitsposition Hindernisse zu finden. Diese Hindernisse können beispielsweise abgehängte Rohre, Trägerelemente oder dergleichen sein. Da derartige Elemente nur bis zu einer gewissen Höhenlage unterhalb der Decke, beispielsweise bis zu höchstens 0,3 m, höchstens 0,8 m oder höchstens 1 m unter der Decke, angeordnet sind, kann der Endeffektor zunächst senkrecht oder im Wesentlichen senkrecht von der Decke bis unter die Höhenlage abtauchen.

Dann kann mit ausreichender Sicherheit davon ausgegangen werden, dass sich keine Rohre oder dergleichen mehr auf der eingenommenen Höhe befinden. Somit kann der Endeffektor anschließend horizontal oder im Wesentlichen horizontal seitwärts bewegt werden.

Insbesondere kann der Endeffektor soweit bewegt werden, bis er sich senkrecht oder zumindest im Wesentlichen senkrecht unter der Arbeitsposition befindet. Sodann kann der Endeffektor nach oben, insbesondere senkrecht oder zumindest im Wesentlichen senkrecht, nach oben bewegt werden bis er die Arbeitsposition erreicht. Das U-förmige bzw. im Wesentlichen U-förmige Bewegungsschema kann somit eine spezifisch auf Baustellen abgestimmte Heuristik sein oder eine solche umfassen.

Somit wird es bei typischen Baustellen möglich, das Hindernis zu umgehen, ohne vorab ein Umfeld zu untersuchen.

Alternativ oder ergänzend ist auch denkbar, dass das Bewegungsschema eine Seitenwechselbewegung umfasst.

Übliche Manipulatoren weisen eingeschränkte Bewegungsmöglichkeiten auf. Der Manipulator kann beispielsweise als mehrgliedriger Arm ausgebildet sein. Er kann drei oder mehr, beispielsweise wenigstens sechs, Freiheitsgrade aufweisen. Bestimmte Arbeitspositionen können dann beispielsweise derart angefahren werden, dass bestimmte Teile des Manipulators in einer Hemisphäre des Bauroboters angeordnet sind. Mithilfe der Seitenwechselbewegung können diese Elemente des Manipulators beispielsweise in die gegenüberliegende Hemisphäre verbracht werden.

Der Endeffektor kann ein Werkzeug aufweisen. Das Werkzeug kann in einer Arbeitsrichtung auf die Arbeitsposition bewegt werden. Dabei kann der Endeffektor derart ausgerichtet sein, dass das Werkzeug mit einem Abstand von weniger als der Hälfte der Länge eines längsten Durchmessers des Endeffektors, gemessen entlang einer Ebene senkrecht zur Arbeitsrichtung, bewegt wird. Vorzugsweise wird der Endeffektor mit einem Abstand von höchstens der Hälfte der Länge eines kürzesten Durchmessers, gemessen in derselben Ebene, bewegt. Dazu kann oder können der Endeffektor und / oder der Manipulator rotiert werden.

Ein Gedanke dabei ist, dass wenn beispielsweise der Endeffektor nicht rotationssymmetrisch ausgebildet und / oder das Werkzeug nicht innerhalb des Endeffektors zentriert angeordnet ist, es bestimmte Positionen und / oder Stellungen des Endeffektors gibt, sodass das Werkzeug näher an das Hindernis heranreichen kann als bei anderen Positionen und / oder Stellungen. Somit können Arbeitspositionen angefahren werden, die sonst nicht erreichbar wären, insbesondere weil ansonsten Teile des Manipulators und / oder des Endeffektors mit dem Hindernis kollidieren würden.

Auch ist denkbar, dass während des Bewegens zur Arbeitsposition der Manipulator am Hindernis vorbei bewegt wird. Somit ist es denkbar, dass nicht nur eine Kollision des Endeffektors und / oder des Werkzeugs mit dem Hindernis vermieden wird, sondern dass auch der übrige Manipulator nicht mit dem Hindernis kollidiert.

Dazu kann eine Bewegungsplanung die Form, insbesondere die Abmessungen, des Endeffektors und / oder des Werkzeugs berücksichtigen. Sie kann auch die Form und / oder mechanische Eigenschaften des Manipulators berücksichtigen. So kann beispielsweise geplant werden, auf welchen Wegen sich unterschiedliche Glieder des Manipulators bewegen, während der Endeffektor von der Anfangsposition zur Arbeitsposition bewegt wird.

Allgemein ist auch denkbar, dass die Bewegungsplanung auch noch weitere Element des Bauroboters mitberücksichtigt. Insbesondere ist denkbar, wenigstens die Mehrzahl der, insbesondere alle, verfügbaren Freiheitsgrade des Bauroboters in die Bewegungsplanung miteinzubeziehen. So ist denkbar, um den Endeffektor von der Anfangsposition zur Endposition zu bewegen, nicht nur den Manipulator mitsamt dem Endeffektor zu steuern, sondern beispielsweise auch eine mobile Plattform des Bauroboters zu steuern.

Bei einem Ausführungsbeispiel kann das Hindernis identifiziert werden, indem Planungsdaten analysiert werden. Alternativ oder ergänzend ist denkbar, dass das Hindernis identifiziert wird, indem ein Arbeitsbereich mit einem Entfernungsmesser optisch abgetastet wird. Der Entfernungsmesser kann ein Laserscanner sein. Alternativ oder ergänzend kann er auch als 3D-Kamera ausgebildet sein und / oder eine solche umfassen.

Der Entfernungsmesser kann während dem optischen Abtasten bewegt werden. Insbesondere kann er kontinuierlich bewegt werden. Alternativ oder ergänzend kann er auch intermittierend bewegt werden. Der Entfernungsmesser kann auch zusammen mit wenigstens einem anderen Element des Bauroboters bewegt werden. Beispielsweise kann zur präzisen Positionsbestimmung des Bauroboters ein Positionsdetektionsgerät, beispielsweise ein Prisma, entlang einer bestimmten Bahn bewegt werden. Werden der Entfernungsmesser und das Positionsdetektionsgerät gemeinsam bewegt, so kann der Entfernungsmesser während der Bewegung des Positionsdetektionsgeräts mitbewegt werden. Somit lassen sich mehrere Messungen des Entfernungsmessers, beispielsweise mehrere 3D-Aufnahmen, zu einer umfassenderen Gesamtmessung, beispielsweise zu einer größeren 3D-Gesamtaufnahme, zusammensetzen.

Denkbar ist auch, dass durch Bewegen des Entfernungsmessers wenigstens eine zusätzliche Perspektive durch den Entfernungsmesser eingenommen werden kann. Somit können auch Abschattungen oder dergleichen reduziert oder vermieden werden. Ansonsten verdeckte Elemente können untersucht werden. So können auch mehrere Hindernisse erkannt werden, die ohne Bewegung des Entfernungsmessers nicht detektierbar wären.

Der Endeffektor kann zu wenigstens zwei Arbeitspositionen nacheinander bewegt werden. Mit anderen Worten kann eine erste Arbeitsposition als Anfangsposition für eine Bewegung zu einer zweiten Arbeitsposition dienen. So ist beispielsweise denkbar, dass der Endeffektor nacheinander zu wenigstens zwei Arbeitspositionen in derselben Hemisphäre eines Arbeitsbereichs des Bauroboters, insbesondere des Manipulators, bewegt wird.

Stehen somit mehrere Arbeitspositionen zur Verfügung, so kann ausgehend von einer ersten Arbeitsposition eine möglichst dicht an der ersten Arbeitsposition befindliche, möglichst schnell und / oder über einen möglichst kurzen Weg erreichbare zweite Arbeitsposition ausgewählt werden. Dabei kann ausgenutzt werden, dass üblicherweise Arbeitspositionen in derselben Hemisphäre des Bauroboters schneller nacheinander anzufahren sind als wenn sich zwei Arbeitspositionen in unterschiedlichen Hemisphären des Bauroboters sich befinden.

Denkbar ist insbesondere, dass zunächst alle Arbeitspositionen in einer ersten Hemisphäre nacheinander angefahren werden. Anschließend können ein oder mehrere, insbesondere alle, Arbeitspositionen in der anderen Hemisphäre des Arbeitsbereichs nacheinander angefahren werden. Zum Wechsel der Hemisphären kann eine Seitenwechselbewegung ausgeführt werden.

Die Gesamtarbeitszeit zur Erreichung aller Arbeitspositionen kann auch dadurch minimiert werden, dass ausgehend von einer Arbeitsposition als Anfangsposition eine nachfolgende Arbeitsposition danach ausgewählt wird, dass von der Anfangsposition aus die nachfolgende Arbeitsposition ohne Umgehung eines Hindernisses erreichbar ist. Somit können zunächst alle "einfach" erreichbaren Arbeitspositionen nacheinander abgearbeitet werden. Anschließend können die Arbeitspositionen, die "schwerer" erreichbar sind, nacheinander angefahren werden.

Die Bewegungsplanung kann durch eine Optimierung unter Randbedingungen und / oder Nebenbedingungen erfolgen. Eine Nebenbedingung hierzu kann sein, dass die Anzahl von Wechseln der Hemisphären und / oder die Nutzung von Bewegungsschemata, beispielsweise einer Seitenwechselbewegung, minimiert wird.

Alternativ oder ergänzend ist auch der Einsatz eines neuronalen Netzes denkbar. Ein Training des neuronalen Netzes kann anhand von BIM-Daten erfolgen. Denkbar ist auch, dass zum Training Trainingsdaten vor und / oder während des Trainings simuliert werden.

In den Rahmen der Erfindung fällt des Weiteren ein **Bauroboter,** umfassend einen Manipulator mit einem Endeffektor und einer Steuerung. Die Steuerung ist eingerichtet, den Bauroboter gemäß dem vorangehenden beschriebenen Verfahren zu steuern.

Der Bauroboter kann zur Ausführung von Bauarbeiten auf einer Hochbau-Baustelle und / oder einer Tiefbau-Baustelle ausgebildet sein. Er kann zur Ausführung von Bauarbeiten an einer Decke, einer Wand und / oder einem Boden eingerichtet sein. Er kann zum Bohren, Trennen, Meißeln, Schleifen und / oder Setzen eines Bauelements ausgebildet sein. Er kann ein oder mehrere Werkzeugmaschinen aufweisen. Insbesondere kann die Werkzeugmaschine wechselbar angeordnet und / oder ausgebildet sein. Die Werkzeugmaschine kann eine elektrische Werkzeugmaschine sein. Die Werkzeugmaschine kann ein Werkzeug aufweisen.

Der Endeffektor kann die Werkzeugmaschine und / oder das Werkzeug umfassen. Beispielsweise kann der Endeffektor eine elektrische Werkzeugmaschine aufweisen. Die elektrische Werkzeugmaschine kann ein Bauwerkzeug, ein Trennwerkzeug, ein Schleifwerkzeug und / oder ein Setzwerkzeug umfassen. Denkbar ist auch, dass der Endeffektor und / oder die Werkzeugmaschine zum Markieren ausgebildet sind. Beispielsweise kann der Endeffektor ein Farbsprühgerät aufweisen.

Der Manipulator kann als Roboterarm ausgebildet sein. Der Manipulator kann auch eine Hubvorrichtung aufweisen. Die Hubvorrichtung kann das vom Manipulator erreichbare Gesamtvolumen vergrößern. Der Manipulator kann wenigstens drei Freiheitsgrade aufweisen. Insbesondere kann er wenigstens sechs Freiheitsgrade aufweisen.

Der Bauroboter kann auch eine mobile Plattform aufweisen. Die mobile Plattform kann ein Räderfahrwerk und / oder ein Kettenfahrwerk umfassen. Die mobile Plattform kann wenigstens zwei Freiheitsgrade aufweisen. Der Bauroboter kann insgesamt wenigstens zehn Freiheitsgrade aufweisen.

Der Bauroboter kann einen Entfernungsmesser aufweisen. Der Entfernungsmesser kann als 3D-Kamera ausgebildet sein und / oder eine solche umfassen. Alternativ oder ergänzend kann er einen Laserscanner umfassen.

Die Steuerung kann als Rechnereinheit ausgebildet sein. Sie kann einen Prozessor, eine Speichereinheit und / oder einen auf dem Prozessor ausführbaren Programmcode aufweisen. Der Prozessor kann ein oder mehrere Unterprozessoren aufweisen. Der Programmcode kann eingerichtet sein, das Verfahren zur Steuerung des Bauroboters durch die Steuerung auszuführen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- Fig. 1: eine perspektivische Darstellung eines Bauroboters;
- Fig. 2A und 2B: eine schematische, perspektivische Darstellung eines einen Arbeitsbereich untersuchenden Bauroboters sowie eine fotografische Aufnahme des Arbeitsbereichs;
- Fig. 3: eine schematische, perspektivische Darstellung des Ergebnisses der Untersuchung des Arbeitsbereichs gemäß Fig. 2B;
- Fig. 4: eine perspektivische Darstellung eines Bauroboters, der seinen Endeffektor zu einer dicht an einem Hindernis befindlichen Arbeitsposition bewegt;
- Fig. 5: eine schematische Darstellung des Bauroboters gemäß Fig. 4 in einer Ansicht von oben;
- Fig. 6: eine perspektivische Darstellung eines Bauroboters, der mit seinem Endeffektor eine Bewegung gemäß einem U-förmigen Bewegungsschema ausführt;
- Fig. 7A und 7B: schematische Darstellungen einer Anfangsstellung und einer Endstellung eines Bauroboters vor beziehungsweise nach einer Seitenwechselbewegung;
- Fig. 8A bis 8F: fotografische Darstellungen des Ablaufs einer Seitenwechselbewegung eines Bauroboters; und
- Fig. 9A bis 9F: schematische, perspektivische Darstellungen eines Ablaufs einer Umgehung eines Hindernisses durch einen Endeffektor.

In der nachfolgenden Beschreibung der Figuren werden zur Erleichterung des Verständnisses der Erfindung für gleiche oder sich funktional entsprechende Elemente jeweils die gleichen Bezugszeichen verwendet.

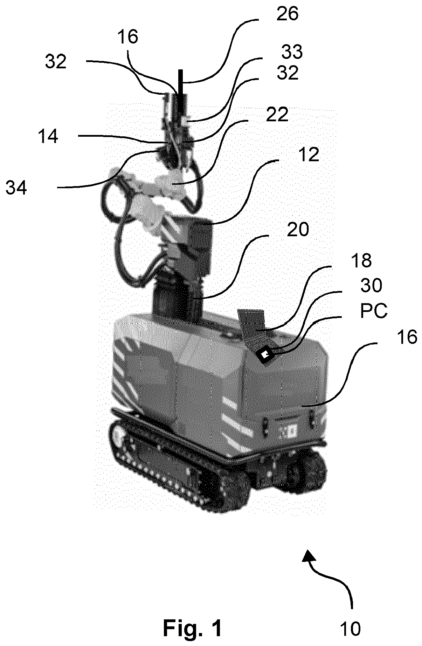

**Fig. 1** zeigt einen Bauroboter **10.** Der Bauroboter 10 weist einen Manipulator **12** mit einem Endeffektor **14** auf. Der Bauroboter 10 weist des Weiteren eine mobile Plattform **16** auf, die in diesem Ausführungsbeispiel ein Kettenfahrwerk aufweist.

Ferner weist der Bohrbauroboter 10 eine Steuerung **18** auf, die in Fig. 1 lediglich schematisch abgebildet ist.

Der Manipulator 12 weist eine Hubvorrichtung **20** sowie einen Arm **22** auf. Der Arm 22 ist mehrachsig. Insbesondere weist er sechs Freiheitsgrade auf. Durch die Hubvorrichtung 20 kann der Arm 22 in vertikaler Richtung verstellt werden, sodass die Reichweite des Armes 22 und damit ein Arbeitsbereich des Manipulators 12 in vertikaler Richtung erweitert wird.

Der Endeffektor 14 weist eine elektrische Werkzeugmaschine **24** auf. In diesem Ausführungsbeispiel ist die elektrische Werkzeugmaschine 24 als, insbesondere elektropneumatische, Bohrhammermaschine ausgebildet. Die elektrische Werkzeugmaschine 24 weist ferner ein Werkzeug **26,** in diesem Ausführungsbeispiel einen Bohrer, auf.

Die Steuerung 18 weist einen, in Fig. 1 lediglich schematisch dargestellten, Rechner **30** auf. Der Rechner 30 weist einen Prozessor, wenigstens eine Speichereinheit, einen auf dem Prozessor ausführbaren Programmcode **PC** sowie eine Kommunikationsschnittstelle auf. Der Programmcode PC ist eingerichtet, den Bauroboter 10 anhand des vorangehend und nachfolgend erläuterten Verfahrens zu steuern. Die Kommunikationsschnittstelle kann eine Tastatur und / oder eine Positionseingabevorrichtung umfassen. Die Kommunikationsschnittstelle ist zur akustischen Datenausgabe eingerichtet. Sie kann auch zur akustischen Dateneingabe eingerichtet sein. Dazu kann sie eine Spracherkennungslogik umfassen.

Der Bauroboter 10 ist als Bohrbauroboter ausgebildet. Insbesondere ist er eingerichtet, in Decken und / oder Wänden zu bohren. Bei einer alternativen Ausführungsform weist der Bauroboter 10 eine Werkzeugwechselvorrichtung auf. Mit dieser ist es ihm in jener Ausführungsform möglich, die elektrische Werkzeugmaschine 24 und / oder das Werkzeug 26 zu wechseln. Beispielsweise kann er mithilfe der Werkzeugwechseleinrichtung eingerichtet sein, ein Setzwerkzeug zum Setzen von Ankern zu verwenden. Auch ist denkbar, dass der Bauroboter 10 mehr als ein Werkzeug, mehr als eine Werkzeugmaschine 24 und / oder andere Arten von Werkzeugen 26 und / oder Werkzeugmaschinen 24 aufweist. Insbesondere ist am Endeffektor 14 ein Farbsprühgerät **32** angeordnet. Das Farbsprühgerät 32 ist eingerichtet, Farbmarkierungen auf Wunsch auf einen Untergrund, beispielsweise eine Decke, eine Wand oder ein Boden, zu sprühen.

Weiter ist am Endeffektor 14 ein Prisma **33** angeordnet. Das Prisma 33 und damit der Endeffektor 14 sind beispielsweise mithilfe einer, insbesondere automatischen, Totalstation (in Fig. 1 nicht dargestellt) lokalisierbar.

Ferner ist am Endeffektor 14 eine 3D-Kamera **34** angeordnet. Die 3D-Kamera 34 ist eingerichtet, dreidimensionale Aufnahmen eines Arbeitsbereichs des Bauroboters 10 aufzunehmen. Die Aufnahmen umfassen dabei auch Tiefeninformationen. Dazu ist die 3D-Kamera 34 eingerichtet, eine Vielzahl von Entfernungen zu messen. Mithilfe der 3-D-Kamera 34 kann somit der Bauroboter 10 einen ihn umgebenden Arbeitsbereich zumindest bereichsweise optisch abtasten.

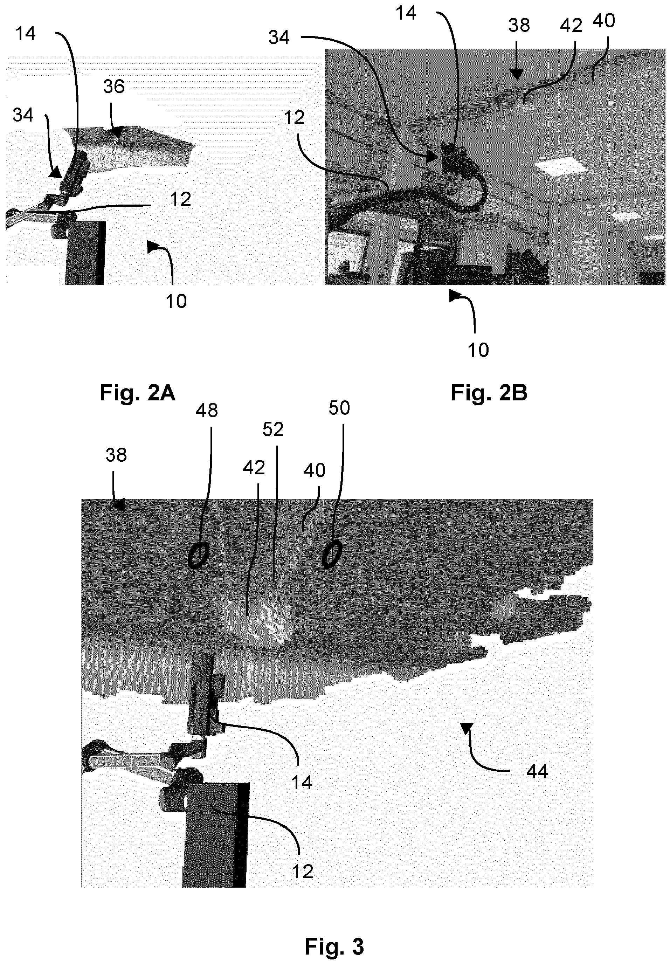

**Fig. 2A** zeigt in einer schematischen, perspektivischen Darstellung den Bauroboter 10 mit dem Manipulator 12, dem Endeffektor 14 und der 3D-Kamera 34. Die 3D-Kamera 34 zeichnet abhängig von den jeweiligen Positionen und Stellungen des Endeffektors 14 sowie des Manipulators 12 eine Aufnahme **36** eines Arbeitsbereichs **38** des Bauroboters 10 entsprechend ihrem Sichtfeld auf. Der Arbeitsbereich 38 kann einer Umgebung des Bauroboters 10 entsprechen.

**Fig. 2B** zeigt in einer fotografischen Darstellung den Arbeitsbereich 38, aus dem die Aufnahme 36 gemäß Fig. 2A stammt. Zu erkennen ist insbesondere ein unter einer Decke angeordneter Kabelkanal **40,** an dessen Unterseite ein weiteres Objekt **42** angeordnet ist.

Durch Bewegen des Manipulators 12 und / oder des Endeffektors 14 und damit der 3D-Kamera 34 können mehrere Aufnahmen 36 (Fig. 2A) des Arbeitsbereichs 38, insbesondere aus unterschiedlichen Positionen und / oder Stellungen, aufgenommen werden.

Während der Aufnahmen werden jeweils auch die Positionen und Stellungen der 3D-Kamera 34 zu jeder der Aufnahmen 36 protokolliert. Die Positionen und Stellungen können dabei mithilfe des Prismas 33 und beispielsweise der Totalstation ermittelt werden.

Bei einem Ausführungsbeispiel werden die einzelnen Aufnahmen 36 jeweils den protokollierten Positionen und Stellungen entsprechend in ein ortsfestes Koordinatensystem projiziert und dazu entsprechend der jeweiligen Projektion entzerrt. Auf Basis des ortsfesten Koordinatensystems können somit die mehreren Aufnahmen 36 zu einer Gesamtaufnahme zusammengesetzt werden.

**Fig. 3** zeigt in einer schematischen, perspektivischen Darstellung ein Beispiel einer solchen Gesamtaufnahme **44** des Arbeitsbereichs 38, wie sie sich aus einer Zusammensetzung der mehreren Aufnahmen 36 ergeben kann. Zur besseren Veranschaulichung ist zusätzlich der Manipulator 12 mit dem Endeffektor 14 in **Fig. 3** abgebildet.

Die Gesamtaufnahme 44 weist somit eine dreidimensionale Punktwolke von Messpunkten der Aufnahmen 36 auf. Bei einer weiteren Ausführungsform kann diese dreidimensionale Punktwolke einer weiteren Bildverarbeitung unterzogen werden. Insbesondere können Zwischenpunkte und / oder Oberflächenverläufe interpoliert und / oder extrapoliert werden.

Die Gesamtaufnahme 44 zeigt eine Unebenheit **46.** Die Unebenheit 46 entspricht dabei dem Kabelkanal 40 mit dem weiteren Objekt 42.

In Fig. 3 sind ferner schematisch eine Anfangsposition **48,** die beispielsweise einer ersten Arbeitsposition entsprechen kann, und eine, insbesondere zweite, Arbeitsposition **50** auf jeweils gegenüberliegenden Seiten des Kabelkanals 40 bzw. des Objekts 42 markiert.

Von der Anfangsposition 48 kann der Endeffektor 14 aufgrund des Kabelkanals 40 und dem Objekt 42 nicht auf gerader Linie zur Arbeitsposition 50 bewegt werden. Somit bilden der Kabelkanal 40 und das Objekt 42 ein Hindernis **52.**

Um somit von der ersten Arbeitsposition bzw. der Anfangsposition 48 zur Arbeitsposition 50 zu gelangen, umgeht der Bauroboter 10 mit seinem Manipulator 12 und seinem Endeffektor 14 das Hindernis 52.

Bei diesem Ausführungsbeispiel ist das Hindernis 52 durch Untersuchung, insbesondere durch optisches Abtasten, des Arbeitsbereichs 38 detektiert worden. Insbesondere erfolgte bei diesem Ausführungsbeispiel eine Detektion des Hindernisses 52 mithilfe der 3D-Kamera 34.

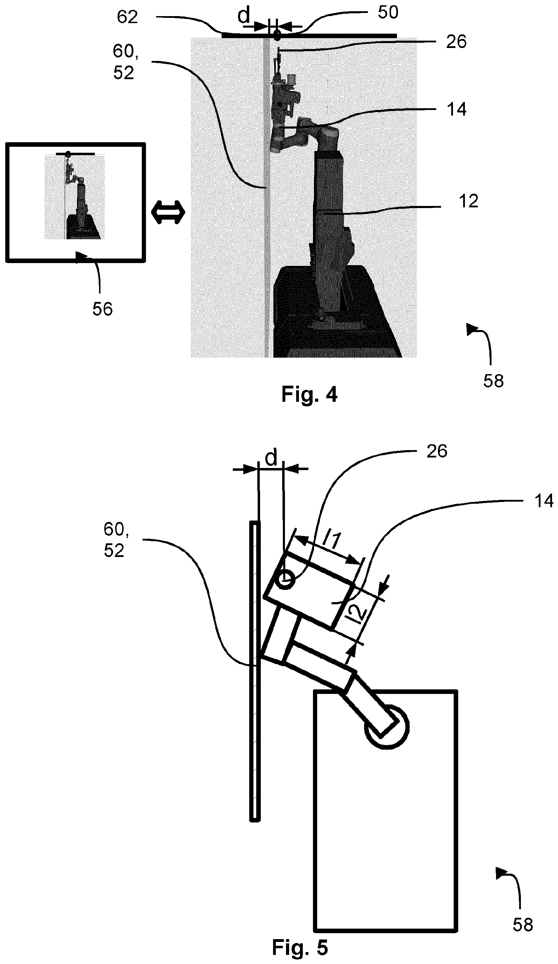

Bei einem weiteren Ausführungsbeispiel, wie es in **Fig. 4** und **Fig. 5** abgebildet ist, liegen - in Fig. 4 symbolisch abgebildete - BIM-Daten **56** einer in Fig. 4 schematisch dargestellten Baustelle **58** vor. Die BIM-Daten 56 können beispielsweise in Form von CAD-Daten vorliegen. Insbesondere sind aus den BIM-Daten 58 eine Wand **60** und eine Decke **62** sowie deren jeweilige Formen, Positionen und Stellungen bekannt.

Eine zu erreichende Arbeitsposition 50 befindet sich entsprechend der BIM-Daten 56 an der Decke 62. Die Arbeitsposition 50 befindet sich in einem geringen Abstand zur Wand 60. Durch ihre Nähe behindert die Wand 60 somit den Zugang zur Arbeitsposition 50 an der Decke 62. Die Wand 60 bildet somit ein Hindernis 52.

Somit kann bei diesem Ausführungsbeispiel die Wand 60 und damit das Hindernis 52 durch Analyse der BIM-Daten 56 detektiert werden. Insbesondere kann durch Analyse der BIM-Daten 56 ermittelt werden, dass die Wand 60 ein Hindernis 52 für eine Erreichung der Arbeitsposition 50 bildet.

Um somit den Endeffektor 14 mit seinem Werkzeug 26 zur Arbeitsposition 56 bewegen zu können, werden der Manipulator 12 und der Endeffektor 14 derart ausgerichtet, dass das Werkzeug 26 dicht am Hindernis 52, insbesondere kollisionsfrei, entlanggeführt wird.

**Fig. 5** zeigt dazu in einer schematischen Darstellung die Situation gemäß Fig. 4 in einer schematischen Ansicht von oben.

Zu erkennen ist, dass der in Fig. 5 schematisch dargestellte Endeffektor 14 mit dem Werkzeug 26 einen längsten Durchmesser **I1** und einen kürzesten Durchmesser **I2** aufweist.

Das Werkzeug 26 ist nicht-zentrisch am Endeffektor 14 angeordnet. Es befindet sich insbesondere in einem Randbereich des Endeffektors 14.

Je nach relativer Lage und Position des Endeffektors 14 zum Hindernis 52 können somit Arbeitspositionen angefahren werden, die sich mehr oder weniger dicht am Hindernis 52 befinden.

In der Situation gemäß Fig. 4 und 5 ist der Endeffektor 14 derart angeordnet, dass sich das Werkzeug 26 im Abstand d von dem Hindernis 52 entfernt befindet. Dabei beträgt der Abstand d weniger als die Hälfte der Länge des längsten Durchmessers I1.

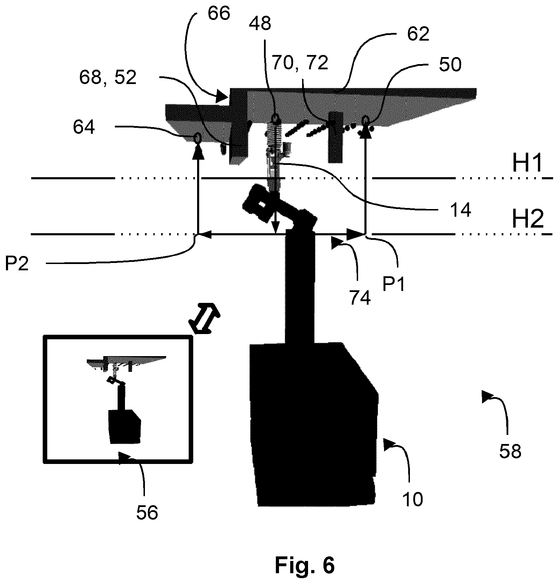

**Fig. 6** zeigt nun eine weitere Baustelle 58. In der gezeigten Situation wird der Endeffektor 14 des Bauroboters 10 ausgehend von einer Anfangsposition 48 zu einer Arbeitspositionen 50 bewegt. Anschließend kann er zu weiteren Arbeitspositionen, beispielsweise einer Arbeitsposition **64,** bewegt werden.

Die Anfangsposition 48 kann dabei ebenfalls eine Arbeitsposition sein, beispielsweise an der bereits eine Bauarbeit, z. B. ein Bohren eines Loches, verrichtet worden ist.

Die Arbeitspositionen 50, 64 befinden sich wiederum an einer Decke 62. Die Decke 62 weist eine Stufe **66** auf. An der Decke befinden sich zwei Installationselemente **68** und **70.** Die Installationselemente 68, 70 ragen von der Decke 62 nach unten ab. Sie bilden somit Hindernisse 52, **72.**

Formen, Positionen und Stellungen der Hindernisse 52, 72 sind durch Analyse von BIM-Daten 56 der Baustelle 58 detektiert. Alternativ oder ergänzend ist auch hier denkbar, die Hindernisse 52, 72 durch Analysieren, insbesondere optisches Abtasten, eines Arbeitsbereichs, wie beispielsweise im Zusammenhang mit Fig. 2A, 2B und 3 beschrieben, zu detektieren.

Aus den BIM-Daten 56 und / oder aus allgemeinem Wissen über derartige Hindernisse 52, 72, wie sie auf Baustellen typischerweise zu erwarten sind, wird abgeleitet, dass die Hindernisse 52, 72 nicht unterhalb einer bestimmten Höhenlage **H1** reichen. Die Höhe der Höhenlage H1 mag beispielsweise wenigstens 30 cm unterhalb der Decke, wenigstens 80 cm unterhalb der Decke, oder wenigstens 1 m unterhalb der Decke betragen.

Um die auf der Baustelle 58 vorhandenen Hindernisse 52, 72 zu umgehen und den Endeffektor 14 kollisionsfrei zu den Arbeitspositionen 50 bzw. 64 zu bewegen, wird bei diesem Ausführungsbeispiel folgendes Bewegungsschema **74** verwendet:
Zunächst wird der Endeffektor 14 in einer zur Decke 62 senkrechten Richtung, also in diesem Fall vertikal oder zumindest in einer im Wesentlichen vertikalen Richtung, von der Anfangsposition 48 weg, im vorliegenden Fall also nach unten, bewegt.

Der Endeffektor 14 unterschreitet die Höhenlage H1. Insbesondere erreicht er eine horizontale Ebene auf Höhe einer Höhenlage **H2.** Um somit zur Arbeitsposition 50 zu gelangen, wird der Darstellung gemäß Fig. 6 der Endeffektor 14 nach rechts bis zu einer Position **P1** bewegt. An der Position P1 befindet er sich in senkrechter Linie unterhalb der zu erreichenden Arbeitsposition 50. Sodann wird der Endeffektor 14 ausgehend von der Position P1 senkrecht nach oben bewegt, um sich der Arbeitsposition 50 anzunähern, bis er, insbesondere sein Werkzeug 26 (Fig. 1), erreicht. Insgesamt ist somit der Endeffektor 14 entlang eines U-förmigen Bewegungsschemas bewegt worden.

Beispielsweise nach Erledigung einer an der Arbeitsposition 50 zu vollbringenden Bauaufgabe kann der Endeffektor 14 zur Arbeitsposition 64 bewegt werden.

Dies kann analog ebenfalls mithilfe eines U-förmigen Bewegungsschemas erfolgen. Insbesondere kann der Endeffektor 14 zunächst zurück zur Position P1 bewegt werden, so dass er sich erneut unterhalb der Höhenlage H1 befindet. Sodann kann der Endeffektor 14 nach links bewegt werden, bis er an einer Position **P2** senkrecht unterhalb der Arbeitsposition 64 zu liegen kommt. Anschließend kann er senkrecht oder zumindest im Wesentlichen senkrecht nach oben bewegt und damit der Arbeitsposition 64 angenähert werden, bis er diese schließlich erreicht.

Befinden sich die Arbeitsposition 50 und / oder 64 dicht an den jeweiligen Hindernissen 52 und / oder 72, so können vordem Hochfahren ab der jeweiligen Position P1 bzw. P2 in analoger Weise wie in Zusammenhang mit Fig. 4 und 5 beschrieben der Bauroboter 10, sein Manipulator 12 und / oder der Endeffektor 14 zusätzlich bewegt werden, um den Endeffektor 14 zur Erreichung der Arbeitspositionen 50 bzw. 64 geeignet auszurichten.

Somit können aufwendige Berechnungen von Bewegungspfaden entfallen oder zumindest wesentlich reduziert werden.

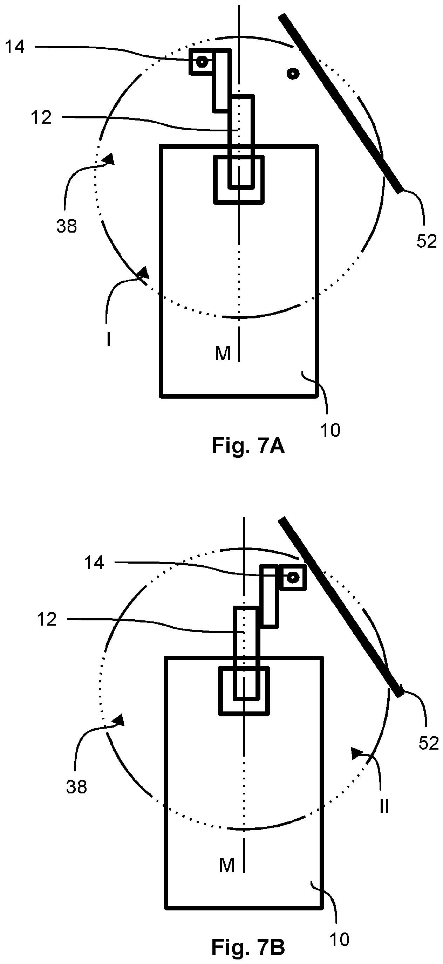

**Fig. 7A** und **7B** zeigen schematische Ansichten von oben auf den Bauroboter 10 in einer Anfangsstellung vor und einer Endstellung nach einer Seitenwechselbewegung.

Vor der Seitenwechselbewegung (Fig. 7A) befindet sich der Endeffektor 14 in einer ersten Hemisphäre I des - hier vereinfachend und beispielhaft kreisförmigen - Arbeitsbereichs 38 des Manipulators 12.

Nach der Seitenwechselbewegung (Fig. 7B) befindet sich der Endeffektor 14 in einer zweiten Hemisphäre Il des Arbeitsbereichs 38.

Durch Vergleich der Ansichten von oben gemäß Fig. 7A bzw. Fig. 7B ist zu erkennen, dass durch die Seitenwechselbewegung der Endeffektor 14 in eine im Wesentlichen spiegelbildliche Stellung relativ zum Manipulator 12 und / oder relativ zu einer Mittenebene M des Bauroboters 10 gelangt. Somit kann der Endeffektor 14 auch zu Arbeitspositionen am Rande des Arbeitsbereichs 38 in der jeweiligen Hemisphäre I bzw. II sowie zu einer Arbeitsposition 50 gelangen, die sich in einer Hemisphäre, hier beispielsweise der Hemisphäre II, dicht an einem Hindernis 52 befindet und sonst nicht oder nur mit größerem Aufwand, beispielsweise durch Bewegen des gesamten Bauroboters 10 einschließlich seiner mobilen Plattform 16 (Fig. 1) auf der betreffenden Baustelle, erreichbar wäre.

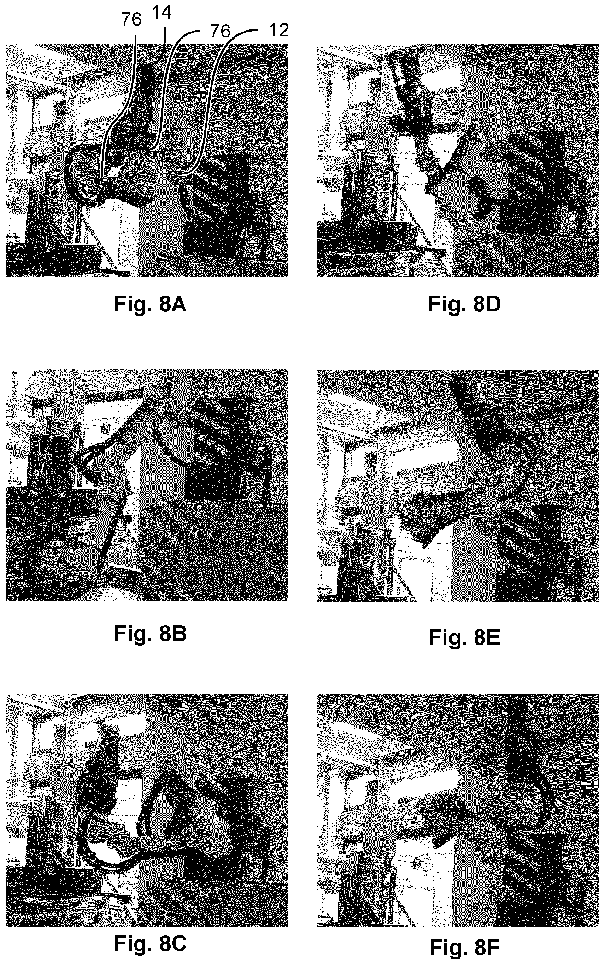

Ein Bewegungsschema für eine solche Seitenwechselbewegung, das einen Seitenwechsel innerhalb eines vergleichsweise geringen Volumens ermöglicht, ist in **Fig. 8A bis 8F** dargestellt.

Fig. 8A bis 8F zeigen dazu den Ablauf der Seitenwechselbewegung in Form fotografischer Darstellungen einzelner Phasen des Bewegungsschemas. Dabei sind Bezugszeichen aus Gründen der Übersichtlichkeit lediglich in Fig. 8A eingetragen.

Ausgehend beispielsweise von einer Ruheposition gemäß Fig. 8A wird der Manipulator 12 zunächst seitlich nach unten gestreckt (Fig. 8B) und schwenkt anschließend, nunmehr mit im Vergleich zu den Fig. 8A und 8B entgegengesetzter Ausrichtung zweier Teile **76, 78** des Manipulators 12 zusammen (Fig. 8C, 8D, 8E). Dabei gelangt der Endeffektor 14 in die Nähe seiner Ausgangsposition, nunmehr jedoch mit einer im Wesentlichen spiegelbildlichen Stellung der Teile 76, 78 zueinander im Vergleich zur Anfangsstellung gemäß Fig. 8A. Abschließend werden der Manipulator 12 und/oder der Endeffektor 14 rotiert, bis der Endeffektor 14 in eine gewünschte Endstellung, insbesondere wie in Fig. 8F abgebildet, gelangt.

Durch die anfängliche Bewegung nach unten kann dabei gegenüber beispielsweise einer im Wesentlichen horizontalen Bewegung für die Seitenwechselbewegung benötigtes Volumen eingespart werden. Somit kann diese Seitenwechselbewegung selbst bei beengten Raumverhältnissen realisiert werden.

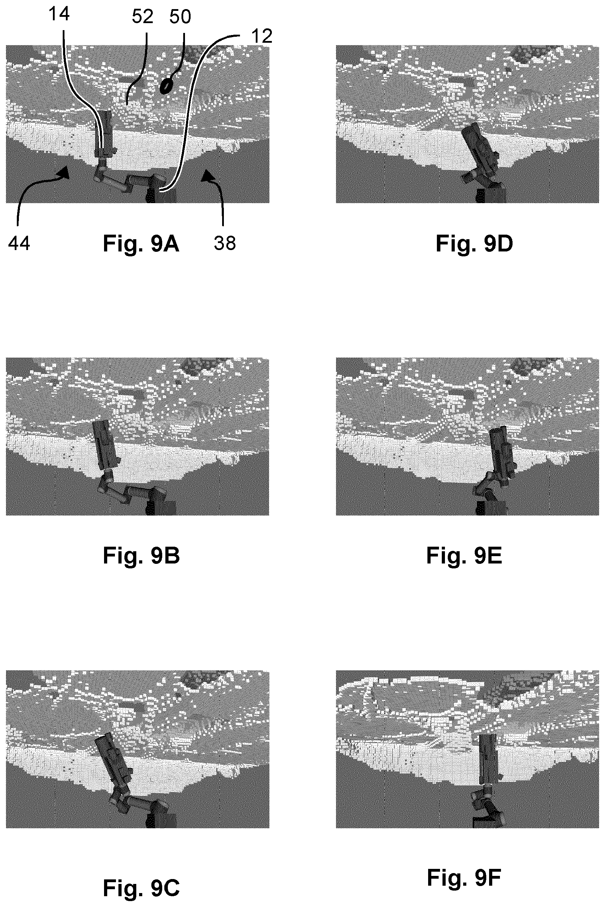

**Fig. 9A bis 9F** zeigen eine Alternative zur Umgehung eines Hindernisses. Denkbar ist, diese Alternative allein und / oder in Kombination mit einer anderen Alternative, insbesondere unter Verwendung eines Bewegungsschemas, beispielsweise wie in Bezug auf Fig. 6 beschrieben, zu verwenden.

Dazu zeigen Fig. 9A bis 9F den Ablauf einer Bewegung des Manipulators 12 und des Endeffektors 14 in Form schematischer Darstellungen einzelner Phasen der Bewegung in Verbindung mit einer Punktwolke eines Arbeitsbereichs 38.

Auch hier sind Bezugszeichen aus Gründen der Übersichtlichkeit lediglich in Fig. 9A eingetragen.

Beispielhaft wird bei diesem Ausführungsbeispiel davon ausgegangen, dass der Arbeitsbereich 38 mittels der 3D-Kamera 34 (Fig. 1) vorab optisch abgetastet worden ist, um eine Gesamtaufnahme 44 zu erhalten und ein Hindernis 52 zu detektieren. Auch hier wäre denkbar, alternativ oder ergänzend BIM-Daten zu analysieren.

Fig. 9A bis 9F zeigen aufeinanderfolgende Phasen eines beispielhaften Bewegungsablaufs des Manipulators 12 mitsamt dem Endeffektor 14, durch den insgesamt das Hindernis 52 umgangen wird.

Bei dieser Alternative berechnet die Steuerung 18 (Fig. 1) vorab einen Bewegungspfad von der Anfangsstellung gemäß Fig. 9A bis zu einer Endstellung gemäß Fig. 9F mittels einer dynamischen Suche eines kollisionsfreien Bewegungspfades.

Als Ergebnis der dynamischen Suche wird ausgehend von der Anfangsstellung (Fig. 9A) wird gemäß dem vorausberechneten Bewegungspfad zunächst der Endeffektor 14 abgekippt (Fig. 9B, 9C), um das Hindernis 52 möglichst dicht umgehen zu können. Durch die Kippung des Endeffektors kann die erforderliche Wegstrecke des Manipulators 12 reduziert werden, um den Endeffektor 14 unterhalb des Hindernisses 52 an diesem vorbeibewegen zu können (Fig. 9D).

Anschließend wird der Endeffektor 14 aufgerichtet (Fig. 9E) und vertikal nach oben bewegt, bis er die gewünschte Endstellung (Fig. 9F) und insbesondere eine Arbeitsposition 50 erreicht.

Denkbar ist, dass während dieser Bewegung die 3-D-Kamera 34 zusätzliche Aufnahmen des Arbeitsbereichs 38 aufnimmt.

Bei einer Ausführungsform erfolgt die dynamische Suche eines kollisionsfreien Bewegungspfades in Form eines hybriden Verfahrens.

Das hybride Verfahren kann eine geradlinige Annäherung mit wenigstens einem Bewegungsschema kombinieren. Das hybride Verfahren kann beispielsweise wie folgt ausgebildet sein:
Der Manipulator 12 und der Endeffektor 14 werden zunächst als dynamische Kette modelliert.

Schrittweise wird zur Suche eines kollisionsfreien Bewegungspfades ausgehend von einer jeweils aktuellen Position und Stellung des Manipulators 12 und des Endeffektors 14 versucht, einen kollisionsfreien linearen Pfad zur Arbeitsposition 50, also der zu erreichenden Position, zu finden. Gegebenenfalls wird der Bewegungspfad abgesenkt und / oder eine horizontale Bewegung ausgeführt, um unterhalb des Hindernisses 52 an diesem vorbeizukommen und so einen linearen Pfad zu finden.

Anhand von Sätzen von Prüfkriterien wird geprüft, ob der Manipulator 12 und / oder der Endeffektor 14 sich in einer "schwierige" Standardsituation befinden.

Ein Beispiel für eine solche "schwierige" Standardsituation ist beispielsweise der vorangehend beschriebene Fall, dass sich die zu erreichende Arbeitsposition 50 innerhalb eines bestimmten maximalen Abstandes vom Hindernis 52 befindet. Ein weiteres Beispiel betrifft den im Zusammenhang mit den Fig. 7A, 7B und 8A bis 8F beschriebene Fall, dass sich der Endeffektor 14 in einer Hemisphäre befindet, die Arbeitsposition 50 jedoch einen Wechsel in die andere Hemisphäre erfordert.

Wird eine solche "schwierige" Standardsituation identifiziert, so wird ein zugehöriges Bewegungsschema, beispielsweise im letztgenannten Beispiel das Bewegungsschema für eine Seitenwechselbewegung, ausgewählt und realisiert.

Dazu sind im Programmcode PC (Fig. 1) der Steuerung 18 (Fig. 1) mehrere Sätze von Prüfkriterien sowie zugehörige Bewegungsschemata abgelegt. Denkbar ist auch, dass ein U-förmiges Bewegungsschema und ein zugehöriger, hierzu geeigneter Satz von Prüfkriterien mit abgelegt ist.

Denkbar ist, unter mehreren möglichen, insbesondere durch dieses hybride Verfahren auffindbaren, Bewegungspfaden einen Bewegungspfad auszuwählen, der zusätzliche Nebenbedingungen erfüllt. Eine solche Nebenbedingung kann beispielsweise eine geringe, insbesondere begrenzte, Anzahl von Wechseln der Hemisphäre über den gesamten Bewegungspfad hinweg. Durch derartige Nebenbedingungen können Verfahrwege zusätzlich minimiert werden.

Denkbar ist auch, auch die mobile Plattform 16 (Fig. 1) mit ihren zusätzlichen Freiheitsgraden in die Modellierung der dynamischen Kette zu integrieren. Dies ermöglicht es, den vom Bauroboter 10 nutzbaren Arbeitsbereich 38 (Fig. 9A) zu vergrößern.

Dieses hybride Verfahren ermöglicht vergleichsweise stabile Lösungen mit geringen Verfahrzeiten. Auch ermöglicht das hybride Verfahren, für unterschiedlichste Arbeitspositionen Bewegungspfade finden und damit die Arbeitspositionen erreichen zu können.

Alternativ oder ergänzend ist auch denkbar, beispielsweise ein Monte-Carlo-basiertes Random Tree-Verfahren zur dynamischen Suche zu verwenden.

### Bezugszeichenliste

- 10: Bauroboter
- 12: Manipulator
- 14: Endeffektor
- 16: Plattform
- 18: Steuerung
- 20: Hubvorrichtung
- 22: Arm
- 24: Werkzeugmaschine
- 26: Werkzeug
- 30: Rechner
- 32: Farbsprühgerät
- 33: Prisma
- 34: 3D-Kamera
- 36: Aufnahme
- 38: Arbeitsbereich
- 40: Kabelkanal
- 42: Objekt
- 44: Gesamtaufnahme
- 46: Unebenheit
- 48: Anfangsposition
- 50: Arbeitsposition
- 52: Hindernis
- 56: BIM-Daten
- 58: Baustelle
- 60: Wand
- 62: Decke
- 64: Arbeitsposition
- 66: Stufe
- 68: Installationselement
- 70: Installationselement
- 72: Hindernis
- 74: Bewegungsschema
- 76: Teil
- 78: Teil
- H1: Höhenlage
- H2: Höhenlage
- I: Hemisphäre
- II: Hemisphäre
- M: Mittenebene
- P1: Position
- P2: Position
- PC: Programmcode
- I1: Durchmesser
- I2: Durchmesser

## Patentansprüche

1. **Verfahren** zur Steuerung eines Bauroboters (10), der einen Manipulator (12) aufweist und wobei der Manipulator (12) einen Endeffektor (14) aufweist, wobei der Endeffektor (14) von einer Anfangsposition (48) zu einer Arbeitsposition (50, 64) bewegt wird, wobei
- ein Hindernis (52, 72) identifiziert wird, und
- das identifizierte Hindernis (52, 72) umgangen wird.

2. Verfahren nach dem vorhergehenden Anspruch, **dadurch gekennzeichnet, dass** wenigstens ein Bewegungsschema (74) realisiert wird.

3. Verfahren nach einem der vorhergehenden Ansprüche, **dadurch gekennzeichnet, dass** das Bewegungsschema (74) einer U-förmigen oder im Wesentlichen U-förmigen Bewegung entspricht.

4. Verfahren nach einem der vorhergehenden Ansprüche, **dadurch gekennzeichnet, dass** das Bewegungsschema (74) eine Seitenwechselbewegung umfasst.

5. Verfahren nach einem der vorhergehenden Ansprüche, **dadurch gekennzeichnet, dass** der Endeffektor (14) ein Werkzeug (26) aufweist, wobei das Werkzeug (26) in einer Arbeitsrichtung auf die Arbeitsposition (50, 64) bewegt wird und wobei der Endeffektor (14) derart ausgerichtet ist, dass das Werkzeug (26) mit einem Abstand (d) von weniger als der Hälfte der Länge eines längsten Durchmessers (I1) in einer Ebene senkrecht zur Arbeitsrichtung des Endeffektors (14) bewegt wird.

6. Verfahren nach einem der vorhergehenden Ansprüche, **dadurch gekennzeichnet, dass** während des Bewegens zur Arbeitsposition (50, 64) der Manipulator (12) am Hindernis (52, 72) vorbei bewegt wird.

7. Verfahren nach einem der vorhergehenden Ansprüche, **dadurch gekennzeichnet, dass** ein Arbeitsbereich (38) mit einem Entfernungsmesser, beispielsweise einer 3D-Kamera (34), optisch abgetastet wird.

8. Verfahren nach einem der vorhergehenden Ansprüche, **dadurch gekennzeichnet, dass** der Entfernungsmesser während dem optischen Abtasten bewegt wird.

9. Verfahren nach einem der vorhergehenden Ansprüche, **dadurch gekennzeichnet, dass** der Endeffektor (14) nacheinander zu wenigstens zwei Arbeitspositionen (50, 64) in einer Hemisphäre (I, II) eines Arbeitsbereichs (38) des Bauroboters (10), insbesondere des Manipulators (12), bewegt wird.

10. Verfahren nach einem der vorhergehenden Ansprüche, **dadurch gekennzeichnet, dass** ausgehend von einer Arbeitsposition (50, 64) als Anfangsposition (48) eine nachfolgende Arbeitsposition (50, 64) danach ausgewählt wird, dass von der Anfangsposition (48) aus die nachfolgende Arbeitsposition (50, 64) ohne Umgehung eines Hindernisses (52, 72) erreichbar ist.

11. Bauroboter (10) umfassend einen Manipulator (12) mit einem Endeffektor (14) und einer Steuerung (18), wobei die Steuerung (18) eingerichtet ist, den Bauroboter (10) nach einem Verfahren nach einem der vorhergehenden Ansprüche zu steuern.

12. Bauroboter (10) umfassend einen Manipulator (12) mit einem Endeffektor (14) und einer Steuerung (18), wobei die Steuerung (18) eingerichtet ist, den Manipulator und / oder den Endeffektor (14) in einer U-förmigen Bewegung, einer im Wesentlichen U-förmigen Bewegung und / oder einer Seitenwechselbewegung, beispielsweise bei der der Endeffektor (14) von einer Hemisphäre (I, II) eines Arbeitsbereichs (38) des Manipulators (12) zu einer anderen Hemisphäre (I, II) des Arbeitsbereichs (38) wechselt, zu steuern.
